# EUROPEAN PATENT APPLICATION

(11) **EP 3 097 832 A1**
(43) Date of publication of application: **30.11.2016**
(21) Application number: 16153851.7
(22) Date of filing: 02.02.2016
(51) Int. Cl.: A47J 43/27, B65D 81/32, B65D 85/80

(54) **WHIPPING CREAM SHAKER**

(30) Priority: 29.05.2015 AU 2015100707
(71) Applicant: Coles Supermarkets Australia Pty Ltd, Tooronga, Victoria 3146 (AU)
(72) Inventor: HATFIELD, Jana, Macedon, Victoria 3440 (AU); ROBINSON, Adam Richard, Cremorne, Victoria 3121 (AU)
(74) Representative: Regimbeau

(57) **Abstract**

A whipping assembly (10) comprising a first container (12) having an open end (24) and a closed end (22), and a second container (14) having an open end (28) and a closed end (26). The second container (14) is dimensioned so as to be removably nested within the first container (12) in a first configuration. A whipping element (16) is removably seated within the open end (28) of the second container (14) in the first configuration, the whipping element (16) being adapted to whip a liquid food product. In a second configuration, the open end (28) of the second container (14) is removably connected to the open end (24) of the first container (12) and the whipping element (16) is removably mounted intermediate the first and second containers (12, 14).

## Description

### Field of the invention

The present invention relates to shaker containers for preparing food products. More particularly, although not exclusively, the present invention relates to shakers for whipping cream.

### Background of the invention

Whipped cream is often applied to a variety of food and drink products to enhance flavour. For example, whipped cream is often applied to cakes, mousse, pancakes and other desserts, to coffee, hot chocolate, and liqueurs.

Whipped cream is typically prepared by beating cream with a mixer or whisk to incorporate air until the cream is light and fluffy. Alternatively, whipped cream can be provided from aerosol-based pressurised cans.

There are some disadvantages of beating cream with a mixer or whisk. For example, in both instances, cream can splash from a mixing bowl and cleaning of the mixer/whisk will be required once the whipped cream has been prepared. Additionally, mixers typically require the use of electricity, which may not be available in all circumstances.

There are also disadvantages of utilising pressurised cans for whipping cream. Typically, the cream in the pressurised can is aerated by the propellant as it is released to cause the cream to foam. However, pressurised cans provide no control over the degree of whipping or foaming of the cream.

It is an object of the invention to provide an alternative device for whipping cream. It is a further object of the invention to eliminate, or at least ameliorate, one or more disadvantages of prior devices for whipping cream.

Reference to any prior art in the specification is not an acknowledgment or suggestion that this prior art forms part of the common general knowledge in any jurisdiction or that this prior art could reasonably be expected to be understood, regarded as relevant, and/or combined with other pieces of prior art by a skilled person in the art.

### Summary of the invention

In an aspect, the present invention provides a whipping assembly comprising:
a first container having an open end and a closed end;
a second container having an open end and a closed end, the second container being dimensioned so as to be removably nested within the first container in a first configuration; and
a whipping element removably seated within the open end of the second container in the first configuration, the whipping element being adapted to whip a liquid food product;
wherein, in a second configuration, the open end of the second container is removably connected to the open end of the first container and the whipping element is removably mounted intermediate the first and second containers.

Advantageously, the first configuration is a storage configuration and the second configuration is an in use configuration. In the second configuration the first and second containers are removably connected to each other and the whipping assembly is shaken to move the liquid food product back and forth between the first and second containers through the whipping element. In this manner, the liquid food product becomes aerated and whipped.

The liquid food product is preferably whipping cream.

Most preferably, the whipping element is configured to aerate the liquid food product as the whipping assembly is shaken. The whipping element has a circumferential ring that is dimensioned to be removably seated within the open end of the second container. The whipping element preferably includes a central hub or ring from which a plurality of radial spokes depend and extend to the circumference of the whipping element. The whipping element is preferably formed as an integral part.

In a preferred embodiment, the open ends of the first and second containers are removably connected to each other via a twist and lock arrangement. Complementary protrusions and recesses are preferably provided on the respective containers.

### Brief description of the drawings

The invention will now be described, by way of example only, with reference to the accompanying drawings in which:
Figure 1 is an exploded perspective view of the whipping assembly of an embodiment of the invention;
Figure 2 is a perspective view of the whipping assembly of Figure 1 in a first configuration;
Figure 3 is a plan view of a whipping element as shown in Figure 1;

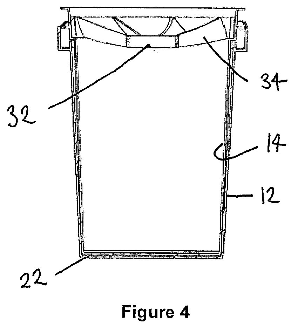

Figure 4 is a side-cross sectional view of the whipping assembly shown in Figure 2; and
Figure 5 is a perspective view of the whipping assembly in its assembled configuration.

### Detailed description of the embodiments

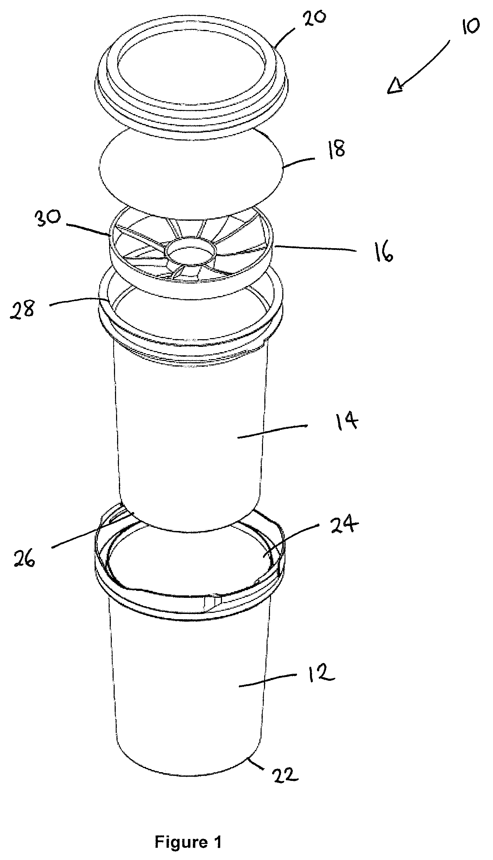

A whipping assembly 10 according to a preferred embodiment of the invention is shown in an exploded parts view in Figure 1. With reference to Figure 1, the assembly 10 includes a first container 12, second container 14, whipping element 16, seal 18, and lid 20.

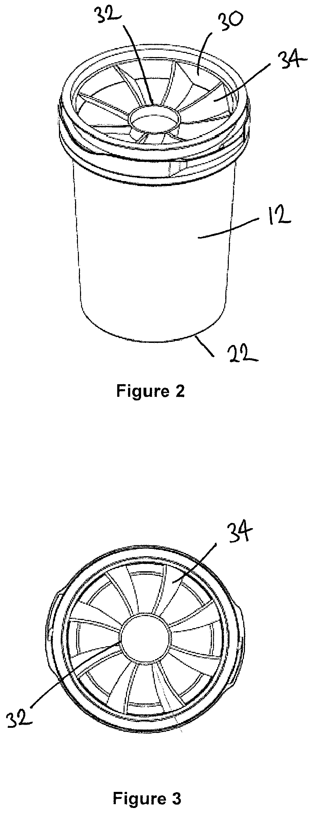

The first container 12 has a closed end 22, and open end 24. The second container 14 has closed end 26, and open end 28. The second container 14 is dimensioned to be removably nested within the first container 12 when in a first, storage configuration, as shown in Figure 2.

Whipping element 16, best shown in Figure 3 has a circumferential ring 30 that is dimensioned to be removably seated in the open end 28 of the second container 14. The whipping element 16 is formed as an integral piece and has central hub or inner ring 32 from which a plurality of radial spokes 34 depend. Spokes 34 extend to the circumferential ring 30.

Spokes 34 are configured to maximise aeration of a liquid food product within the whipping assembly 10, when the whipping assembly is shaken back and forth, as will be described further below. In the embodiment illustrated, and as best seen in Figures 2 and 3, each spoke 34 is presented at an angle with respect to its respective radial axis. Each spoke has an upper edge 36 that sits to one side of the radial axis, and a lower edge 38 to the other side of the radial axis. Each spoke 34 may be slightly curved to so create a fan-like appearance. The height of each spoke 34 may vary across its length, for example each spoke may be narrower in the centre of the element 16 and taper outwardly towards the circumferential ring 30.

In the embodiment illustrated, central hub 32 sits below the horizontal plane of the circumferential ring 30. The height of the spokes 34 therefore taper outwardly as they extend from the hub 32 upwards to meet the circumferential ring 30.

It will be appreciated that configuration of the spokes 34 can take other forms. For example, the spokes may be planar and provided at an angle to the respective radial axis. The spokes 34 may be of even dimension along their length and not taper outwardly. The purpose of the spokes is to aerate the liquid food product within the assembly 10 when the assembly is shaken so other possible configurations of the spokes 34 are within the scope of the invention.

A sealing film 18 is provided at the open end 28 of the second container 14 and serves to seal the liquid food product within the second container 14. A removable lid 20 is provided over the seal 18 and removably connects with the open end of the 24 of the first container 12.

The first configuration of the whipping assembly 10 is shown in Figure 2. This is the storage configuration and the configuration in which the assembly 10 is purchased by a consumer. The liquid food product, preferably whipping cream, is contained within the second container 14 which is nested within the first container 12.

In order to whip the whipping cream, lid 20 is removed from the assembly 10 and seal 18 is removed from the open end of the second container 14. The seal 18 is a conventional film seal that can be peeled from the second container.

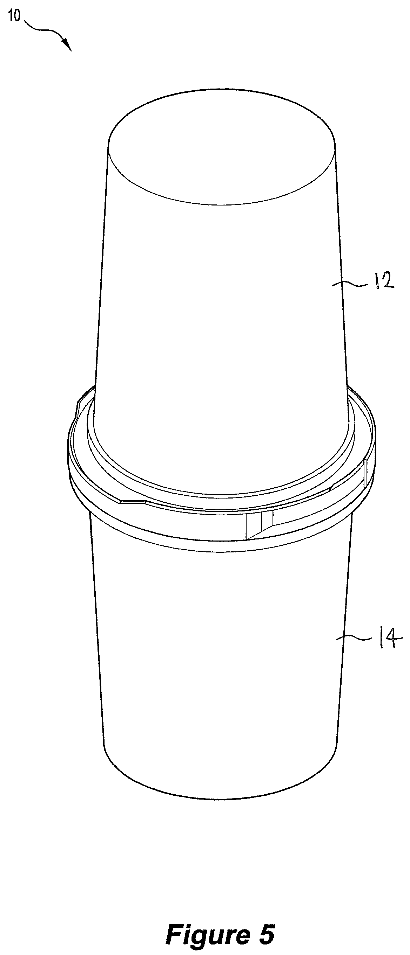

The second container 14 having whipping element 16 seated in its open end 28 and containing the liquid food product is then removed from the first container 12. The first container 12 is then inverted and open end 28 is removably connected to open end 24, preferably by a twist and lock arrangement. This forms the second, in use configuration of the whipping assembly 10 as illustrated in Figure 5.

The assembly 10 is then shaken to whip the liquid food product, advantageously whipping cream, within the assembly. When the cream is whipped, the first and second containers are unlocked and separated. The whipping element 16 can be removed from the upper end 28 of the second container 14, and whipped cream can removed from the assembly 10.

It will be appreciated that the whipping assembly of the invention provides a convenient method of whipping food product, particularly whipping cream, avoiding at least some of the disadvantages of other prior art methods.

It will be understood that the invention disclosed and defined in this specification extends to all alternative combinations of two or more of the individual features mentioned or evident from the text or drawings. All of these different combinations constitute various alternative aspects of the invention.

## Claims

1. A whipping assembly comprising:
a first container having an open end and a closed end;
a second container having an open end and a closed end, the second container being dimensioned so as to be removably nested within the first container in a first configuration; and
a whipping element removably seated within the open end of the second container in the first configuration, the whipping element being adapted to whip a liquid food product;
wherein, in a second configuration, the open end of the second container is removably connected to the open end of the first container and the whipping element is removably mounted intermediate the first and second containers.

2. The whipping assembly of claim 1, wherein the first configuration is a storage configuration and the second configuration is an in use configuration.

3. The whipping assembly of claim 1 or 2, wherein in the second configuration the first and second containers are removably connected to each other and the whipping assembly is shaken to move the liquid food product back and forth between the first and second containers through the whipping element.

4. The whipping assembly of any preceding claim, wherein the whipping element has a circumferential ring that is dimensioned to be removably seated within the open end of the second container, and wherein the whipping element includes a central hub or ring from which a plurality of radial spokes depend and extend to the circumference of the whipping element.

5. The whipping assembly of any preceding claim, wherein the open ends of the first and second containers are removably connected to each other via a twist and lock arrangement.
